(19) Europäisches Patentamt
European Patent Office
Office européen des brevets

(11) **EP 1 142 842 B1**

(12) **EUROPÄISCHE PATENTSCHRIFT**

(45) Veröffentlichungstag und Bekanntmachung des Hinweises auf die Patenterteilung:
**21.02.2007 Patentblatt 2007/08**

(51) Int Cl.:
***C03C 10/00*** *(2006.01)*

(21) Anmeldenummer: **01106108.2**

(22) Anmeldetag: **13.03.2001**

(54) **Reinigungsfreundlicher Glaskeramikkörper**

Easily cleanable glass ceramic articles

Articles en vitrocétamique qui sont facilement nettoyables

(84) Benannte Vertragsstaaten:
**BE DE FR GB IT NL**

(30) Priorität: **08.04.2000 DE 10017698**

(43) Veröffentlichungstag der Anmeldung:
**10.10.2001 Patentblatt 2001/41**

(73) Patentinhaber: **Schott AG**
**55122 Mainz (DE)**

(72) Erfinder:
• **Melson, Sabine, Dr.**
**55124 Mainz (DE)**
• **Schaupert, Dr. Kurt**
**65719 Hofheim (DE)**
• **Nass, Peter, Dr.**
**55120 Mainz (DE)**

(74) Vertreter: **Fuchs Mehler Weiss & Fritzsche**
**Patentanwälte**
**Postfach 46 60**
**65036 Wiesbaden (DE)**

(56) Entgegenhaltungen:
**EP-A- 0 437 228          EP-A- 0 576 809**
**EP-A- 0 945 855          WO-A-98/22405**
**DE-A- 4 321 373          US-A- 4 438 210**
**US-A- 5 492 869          US-A- 5 922 271**

• **DATABASE WPI Section Ch, Week 199730 Derwent Publications Ltd., London, GB; Class L01, AN 1997-328362 XP002174051 & JP 09 132428 A (NIPPON ELECTRIC GLASS CO), 20. Mai 1997 (1997-05-20)**

**Beschreibung**

Die Erfindung betrifft einen reinigungsfreundlichen Glaskeramikkörper für den Hausbereich, vorzugsweise in Anwendung als Sichtscheibe für Öfen, wie Backöfen, insbesondere von Pyrolyseherden oder Kaminöfen, oder als Kochflächen für Kochfelder.

Sichtscheiben für abgeschlossene Heißbereiche mit Temperaturen > 350° C bestehen typischerweise aus transparenter Glaskeramik. Beim Einsatz als Ofensichtscheibe für Kaminöfen oder in Pyrolyseherden schlagen sich Verbrennungsrückstände auf den Sichtscheiben nieder, die entfernt werden müssen. Zur Reinigung der Scheiben werden dabei handelsübliche Reinigungsmittel, Tücher, Schwämme und Schaber verwendet.

Die Reinigung einer solchen Scheibe ist schwierig. Oft bleiben Rückstände auf der Scheibe zurück, die sich nicht entfernen lassen. Bedingt wird dieser Zustand durch die Zusammensetzung der Rückstände und/oder die Oberflächenbeschaffenheit der Glaskeramik.

Die Oberfläche der transparenten Glaskeramik, die mit herkömmlichen Methoden hergestellt wird, ist typischerweise strukturiert und uneben. Sie ähnelt der einer Orangenhaut und weist üblicherweise eine Oberfläche mit einem $R_a$ (Arithmetisches Mittel der absoluten Höhenabweichungen von der mittleren Ebene) von 0,35 $\mu$m bis 0,55 $\mu$m auf. Zudem befinden sich in dieser makroskopischen Struktur vereinzelt kleine Löcher oder Abhebungen von einem Durchmesser bis zu 0,5 mm. In den Vertiefungen, als auch hinter den Erhebungen der Oberfläche setzt sich der Schmutz fest und läßt sich mechanisch nicht mehr entfernen. Spezielle Reinigungsschaber und Schwämme sind bei diesem Einsatz in ihrer mechanischen Reinigungsweise beschränkt wirksam. Dabei ist gerade der Schwamm und der Schaber oftmals das Reinigungsmittel, das den besten Reinigungsgrad erzielt, da bei der Zusammensetzung der Verbrennungsrückstände handelsübliche chemische Reinigungsmittel nicht mehr wirksam sind.

Diese Reinigungsprobleme treten bei einer Sichtscheibe aus Glaskeramik, die zumindest auf einer Seite eine glatte Oberfläche hat, nicht auf.

Eine glatte Oberfläche einer Sichtscheibe aus Glaskeramik kann z.B. in bekannter Weise durch Schleifen mit anschließender Politur erreicht werden. Typischerweise wird mit einem Korn von a. 100 $\mu$ vorgeschliffen. Es folgt dann das Schleifen mit einem Korn von 12 - 15 $\mu$. Die Feinpolitur erfolgt schließlich mit einem noch feinerem Korn.

Eine glatte Oberfläche kann auch in bekannter Weise durch eine Beschichtung erzeugt werden. So sind transparente Glaskeramiken bekannt, die eine wärmerenektierende Beschichtung, z.B. $SnO_2$ aufweisen. Auch ist es bekannt, $SiO_2$ als Schutzschicht auf eine Glaskeramik-Scheibe aufzutragen. Beide Schichten glätten u.a. die Oberfläche und erleichtern die Reinigung.

Die vorstehenden bekannten Methoden zur Erzeugung einer Sichtscheibe aus Glaskeramik mit einer glatten Oberfläche benötigen jedoch zusätzliche Schritte nach der Herstellung der Glaskeramikscheibe, was die Herstellungskosten für die Sichtscheibe erhöht.

Ähnlich liegen die Verhältnisse bei einer Glaskeramikplatte, die als Kochfläche eines Kochfeldes dient.

Glaskeramikplatten für Glaskeramik-Kochflächen werden typischerweise durch Walzen von Li-Al-Si-Glas ("Grünglas") hergestellt, das anschließend keramisiert wird. Das Glaskeramik-Material ist rot bis rotbraun eingefärbt oder ist transparent mit einer nicht transparenten Unterseitenbeschichtung. Durch das Walzen erhält die Glaskeramikplatte eine Oberfläche mit Unebenheiten, aus denen sich Schmutzpartikel, die typischerweise durch überlaufendes Kochgut entstehen, schwer entfernen lassen. Ferner stehen dadurch bei den auf den Kochflächen aufgebrachten Dekoren einzelne Dekorbereiche über und werden bei einer mechanischen Beanspruchung bevorzugt abgerieben. Weiterhin hat die Oberfläche der Kochfläche eine Abweichung von der Ebene.

Der $R_a$ der Rauhigkeit beträgt dabei, wie eingangs bei den Sichtfenstern erwähnt, 035 $\mu$m bis 0,55 $\mu$m. Trotz dieser Rauhigkeit ist ein Klingenschaber das effektivste Reinigungsmittel. Er reinigt besser als Schwämme und Reinigungsmittel mit Putzkörpern. Er hinterläßt allerdings in den "Vertiefungen" Reste.

Die Glaskeramik-Platten haben eine Abweichung von der Ebenheit von bis zu $\pm$ 0,4 mm bei einer Größe von 300 x 300 mm. Die hierdurch entstehenden Verzerrungen der Spiegelbilder ausgedehnter Lichtquellen, wie Leuchtstoffröhren, machen sich störend bemerkbar und schränken die hochwertige Anmutung des Produktes ein.

Die Unebenheiten machen sich auch hinsichtlich der Energieübertragung nachteilig bemerkbar. Die Energieübertragung zum Geschirr bei Kochgeräten mit Glaskeramik-Kochflächen erfolgt weitgehend durch Wärmeleitung; lediglich der Wärmetransport von der Glühwendel zur Unterseite der Kochfläche geschieht durch Strahlung. Durch Unebenheiten entstehen Luftpolster zwischen der Kochfläche und dem Geschirrboden, die die Ankochdauer verlängern. Weiterhin führen sie zu einer Erhöhung der Oberflächentemperatur, wodurch sich die Verluste in die Umgebung erhöhen und der Wirkungsgrad sinkt.

Typischerweise wird die Unterseite der Kochfläche mittels einer Prägewalze mit einer Noppung mit Wellenlänge ca. 2 mm und einer Noppenhöhe von 50 $\mu$m bis 200 $\mu$m versehen.

Die unterseitige Noppung verhindert einmal, daß erfolgreich auf Wärmekontakt basierende Heizkörper eingesetzt werden können.

Durch den verstärkten Einsatz elektronischer Steuerungen in Kochgeräten werden auch vermehrt Anzeigen eingesetzt.

Damit der glatte, ebene Eindruck des Gerätes nicht zerstört wird, werden diese unter der Glaskeramik angebracht. Wegen der Noppung des Materiales sind diese Anzeigen nur mit Verzerrungen sichtbar.

Die Anbringung von Sensoren auf der Unterseite ist durch die Noppung erschwert, da bei Aufbringung durch Siebdruck keine gleichmäßige Schichtstärke erreicht werden kann. Weiterhin ist der Wärmekontakt bei angedrückten Sensoren auf der genoppten Seite schlecht.

Der Erfindung liegt die Aufgabe zugrunde, einen reinigungsfreundlichen Glaskeramikkörper zu schaffen, der ohne nachträgliche Arbeitsschritte wie Feinschleifen oder Beschichten, eine glatte und damit reinigungsfreundliche Oberfläche besitzt.

Die Lösung dieser Aufgabe gelingt erfindungsgemäß durch einen Glaskeramikkörper gemäß Anspruch 1.

Durch die erfindungsgemäßen Maßnahmen ist ein Glaskeramikkörper mit einer sehr glatten Oberflächenstruktur erhältlich, die der von Kalk-Natron-Floatglas gleicht. Es ist weder ein nachträgliches Feinschleifen notwendig, noch wird eine Beschichtung aufgetragen. Die Struktur der Oberfläche wird auf einfache Weise, sozusagen von Hause aus, durch die Zusammensetzung und das Herstellungsverfahren der Glaskeramik bedingt.

Das Grünglas, d.h. das Ausgangsglas für den Keramisierungskörper, wird im Floatverfahren hergestellt. Hierdurch hat es beidseitig eine glatte ebene Oberfläche. Diese bleibt während der anschließenden Keramisierung, und bei Glaskeramikplatten für Kochflächen auch während des Dekorierens, erhalten. Die bei der Herstellung durch Walzen unvermeidliche Feinwelligkeit tritt bei gefloatetem Material nicht auf. Hierdurch ist die Oberseite besonders eben und glatt.

Gefloatete Glaskeramikkörper nach der Erfindung lassen sich durch die glatte Oberfläche leicht reinigen, bei Sichtscheiben für Öfen von kondensierten Schwaden sowie Pyrolyserückständen oder dergleichen, und bei Glaskeramikkochflächen von angekrustetem Überlaufgut. Die Reinigung mittels Klingenschaber hinterläßt daher keine Reste.

Die mit der erfindungsgemäßen Glaskeramik hergestellten Kochflächen haben die für Floatglas typische Abweichung von der Ebenheit von $\pm$ 0,03 mm bezogen auf ein Format von 300 x 300 mm (gegen 0,4 mm bei gewalztem Material). Sie zeichnen sich wegen der besseren Ebenheit durch einen besonders vorteilhaften optischen Eindruck hinsichtlich Spiegelung von Lichtquellen in der Küche oder aus dem Außenbereich aus. Hinzu kommt, daß die üblicherweise ca. 5 $\mu$m dünne Dekorschicht auf Glaskeramikkochflächen durch die fehlende Feinwelligkeit in einer Ebene angeordnet ist. Dadurch, daß es keine hochstehenden Bereiche gibt, wird ein ungleicher Abtrag des Dekors bei mechanischer Belastung vermieden. Es wird so verhindert, daß das Dekor nach längerem Gebrauch "wolkig" wirkt.

Ferner wird der Energieeintrag verbessert.

Die Begriffe der Oberflächenrauheit werden insbesondere in der deutschen Norm DIN 4762 näher erläutert. So ist der Mittenrauhwert $R_a$ das arithmetische Mittel der absoluten Höhenabweichungen von der mittleren Ebene bzw. der arithmetische Mittelwert der absoluten Beträge der Abstände des Istprofils vom mittleren Profil. Dieses mittlere Profil ergibt sich dadurch, daß man durch das Istprofil innerhalb einer Bezugsstrecke ein Profil so legt, daß die Summe der werkstofferfüllten Flächenstücke des Istprofils oberhalb und die Summe der werkstofffreien Flächenstücke unterhalb gleich groß sind. In Anlehnung an DIN 4762 wird der Rq = quadratische Mittenrauhwert, mittels Weißlicht-Interferenz-Mikroskopie (Meßfläche: 0,6 x 0,5 mm) bestimmt. Formelmäßig drückt sich dies aus wie folgt:

$$R_a = \frac{(|z_1| + |z_2| + |z_3| + ... + |z_n|)}{N}$$

$$R_q = \sqrt{\frac{(z_1^2 + z_2^2 + z_3^2 + ... + z_n^2)}{N}}$$

Das Herstellen von flachen Glaskeramikkörpern durch Floaten ist an sich bekannt. Um die Herstellung solcher Glaskeramiken bei einem gefloateten Ausgangsglas zu vereinfachen, hat man dabei versucht, die Keramisierung bereits im Floatbad durchzuführen, um so die Glaskeramiken direkt zu erhalten. Dabei können Fehler im gefloateten Glas, insbesondere störende Oberflächenkristalle, die während des Floatens auftreten, nicht erkannt und beseitigt werden, wodurch die Oberflächenqualität beeinträchtigt wird.

Um eine besonders hohe Oberflächenqualität und damit eine entsprechend hohe Reinigungsfreundlichkeit zu erzielen, wird als Ausgangsglas für den erfindungsgemassen Glaskeramikkörper ein gefloatetes Glas verwendet, bei dem die Entstehung störender Oberflächendefekte beim Floaten durch die Begrenzung der Gehalte von Pt auf <300 ppb, Rh auf <3,0 ppb und ZnO auf < 1,5 Gew.-%, sowie $SnO_2$ auf < 1 Gew. % vermieden, sowie indem das Glas bei der Schmelze ohne Verwendung der üblichen Läutermittel Arsen- oder Antimonoxid geläutert wird.

Diese Gläser zeichnen sich somit durch eine Zusammensetzung aus, welche es erlaubt, die Entstehung störender Oberflächendefekte beim Floaten zu vermeiden. Floatanlagen bestehen üblicherweise aus der Schmelzwanne, in der das Glas geschmolzen und geläutert wird, einem Interface, welches den Übergang von der oxidischen Atmosphäre in der Schmelzwanne in die reduzierende Atmosphäre des nachfolgenden Anlageteils, des Floatteils, gewährleistet, in dem die Formgebung des Glases durch Aufgießen auf ein flüssiges Metall, meist Sn, in einer reduzierenden Atmosphäre von Formiergas, vorgenommen wird. Die Formgebung des Glases erfolgt durch Glattfließen auf dem Sn-Bad und durch sogenannte Top-Roller, die auf die Glasoberfläche eine Kraft ausüben. Während des Transportes auf dem Metallbad erkaltet das Glas und wird am Ende des Floatteiles abgehoben und in einen Kühlofen überführt.

Während der Bildung der Glasoberfläche und des Transportes im Floatbad können Wechselwirkungen zwischen Glas und Floatatmosphäre oder dem Sn-Bad zu störenden Oberflächendefekten führen.

Wenn das Glas mehr als 300 ppb Pt oder mehr als 30 ppb Rh in gelöster Form enthält, können sich durch die reduzierenden Bedingungen in der Glasoberfläche metallische Ausscheidungen von Pt- oder Rh-Partikeln bilden, die als wirksame Keime für große, bis 100 $\mu$m große, Hochquarz-Mischkristalle dienen und so eine störende Oberflächenkristallisation bewirken.

Verwendung finden diese Materialien insbesondere als Elektroden, Auskleidung, Rührer, Transportrohre, Schieber, usw.. Bei Anlagen zur Durchführung des Verfahrens zur Herstellung vorgenannter Glaskeramik werden daher zur Vermeidung der Entstehung von Oberflächenkristallen Einbauten von Werkstoffen aus Pt bzw. Rh weitgehend vermieden und durch keramische Materialien ersetzt bzw. wird deren Belastung in der Schmelzwanne bzw. Interface so gestaltet, daß die genannten Gehalte nicht überschritten werden.

Der ZnO-Gehalt ist auf 1,5 Gew.-% begrenzt. Es hat sich gezeigt, daß unter den reduzierenden Bedingungen des Floatens das Zink in der Oberfläche des Glases verarmt. Es wird dabei angenommen, daß das Zink an der Glasoberfläche teilweise reduziert wird, wodurch es aufgrund des höheren Dampfdruckes von Zn gegenüber dem $Zn^{2+}$ in die Floatatmosphäre verdampft. Neben der für den Betrieb der Floatanlage unerwünschten Verdampfung und Abscheidung des Zn an kälteren Stellen, ist die ungleichmäßige Verteilung des Zn im Glas an der Entstehung von kritischen oberlächennahen Kristallbändern beteiligt. Diese Kristallbänder aus großen Hochquarz-Mischkristallen entstehen in Oberflächennähe dort, wo der Zn-Gehalt im Glas wieder nahezu auf den Ausgangswert angestiegen ist. Es ist daher zweckmäßig, den Ausgangswert von Anfang an klein zu halten.

Der Gehalt des Glases an $SnO_2$ ist auf weniger als 1 Gew.-% begrenzt. Durch Einwirkung der reduziernden Bedingungen im Floatteil wird das $SnO_2$ nämlich in der Glasoberfläche z.T. reduziert. Es bilden sich überraschenderweise Kügelchen aus metallischen Sn im Glas in der unmittelbaren Glasoberfläche, die sich beim Abkühlen oder Reinigen zwar leicht entfernen lassen, jedoch kugelförmige Löcher in der Glasoberfläche zurücklassen, die für die Anwendung äußerst störend sind.

Diese Kügelchen können vermieden werden, wenn der Gehalt an $SnO_2$ sehr gering ist.

Die vorgenannten Ausgangs-Gläser werden ohne Verwendung der für Gläser aus dem $Li_2O$-$Al_2O_3$-$SiO_2$-System üblichen Läutermittel Arsen- und/oder Antimonoxid geläutert. Unter der Einwirkung der reduzierenden Bedingungen beim Floaten werden nämlich die genannten Läutermittel unmittelbar an der Glasoberfläche reduziert und bilden störende und visuell auffällige metallische Beläge. Die Entfernung dieser für die Anwendung störenden und toxikologisch bedenklichen Beläge durch Schleifen und Polieren ist aus wirtschaftlichen Gründen unvorteilhaft. Um die Beläge zu vermeiden, wird daher zweckmäßig zum Erreichen einer geringen Blasenzahl wenigstens ein alternatives chemisches Läutermittel, wie z.B. $SnO_2$, $CeO_2$, Sulfatverbindungen, Chloridverbindungen, bevorzugt 0,2 - 0,6 Gew.-% $SnO_2$ der Glasschmelze zugesetzt ist. Alternativ kann die Glasschmelze auch physikalisch, z.B. mittels Unterdruck oder mittels Hochtemperatur > 1750°C geläutert werden. Somit kann die erforderliche Blasenqualität über alternative Läutermittel und/oder alternative Läuterverfahren sichergestellt werden.

Bei dem Keramisieren ist dabei dafür Sorge zu tragen, daß die durch das Floaten erzielten niedrigen Rauhigkeitswerte nicht beeinträchtigt werden, indem z.B. die Keramisierung hängend oder durch eine Luftkissenkeramisierung erfolgt, d.h. generell ohne Berührung des zu keramisierenden Glaskörpers mit einer Unterlage.

Besondere Vorteile hinsichtlich einer sehr kleinen Rauhigkeit der Oberfläche der Glaskeramik werden durch ein gefloatetes, keramisiertes Aluminosilicatglas mit nachstehender Zusammensetzung in Gew.-% auf Oxidbasis erzielt.

| | |
|---|---|
| $Li_2O$ | 3,2-5,0 |
| $Na_2O$ | 0-1,5 |
| $K_2O$ | 0-1,5 |
| $\Sigma Na_2O + K_2O$ | 0,2-2,0 |
| MgO | 0,1-2,2 |
| CaO | 0-1,5 |
| SrO | 0-1,5 |
| BaO | 0-2,5 |

(fortgesetzt)

| | |
|---|---|
| ZnO | 0-<1,5 |
| $Al_2O_3$ | 19-25 |
| $SiO_2$ | 55-69 |
| $TiO_2$ | 1,0-5,0 |
| $ZrO_2$ | 1,0-2,5 |
| $SnO_2$ | 0-<1,0 |
| $\Sigma TiO_2+ZrO_2+SnO_2$ | 2,5-5,0 |
| $P_2O_5$ | 0-3,0 |

Gemäß einer zweiten Weiterbildung weist das Glas in einer besonders bevorzugten Ausführungsform eine Zusammensetzung auf, in Gew.-% auf Oxidbasis von:

| | |
|---|---|
| $Li_2O$ | 3,5-4,5 |
| $Na_2O$ | 0,2-1,0 |
| $K_2O$ | 0-0,8 |
| $\Sigma Na_2O+K_2O$ | 0,4-1,5 |
| MgO | 0,3-2,0 |
| CaO | 0-1,0 |
| SrO | 0-1,0 |
| BaO | 0-2,5 |
| ZnO | 0-1,0 |
| $Al_2O_3$ | 19-24 |
| $SiO_2$ | 60-68 |
| $TiO_2$ | 1,0-2,0 |
| $ZrO_2$ | 1,2-2,2 |
| $SnO_2$ | 0-0,6 |
| $\Sigma TiO_2+ZrO_2+SnO_2$ | 3,0-4,5 |
| $P_2O_5$ | 0-2,0 |

Dieses Glas wird mit besonderem Vorteil zum Herstellen des erfindungsgemäßen Glaskeramikkörpers verwendet, weil die entsprechende Oberfläche sehr reinigungsfreundlich ist.

Dem erfindungsgemäßen Glaskeramikkörper kommt immer dann eine Verwendung zu, bei der eine Reinigungsfreundlichkeit notwendig ist. Dies ist im besonderen Maße bei Sichtscheiben für Öfen, insbesondere Backöfen, oder bei Glaskeramikkochflächen von Kochfeldern gegeben.

**Patentansprüche**

1. Reinigungsfreundlicher Glaskeramikkörper, keramisiert aus einem gefloateten Ausgangsglas, das einen Gehalt von weniger als 300 ppb Pt, weniger als 30 ppb Rh, weniger als 1,5 Gew.-% ZnO und weniger als 1 Gew.-% $SnO_2$ aufweist, das bei der Schmelze ohne Verwendung der üblichen Läutermittel Arsen- und/oder Antimonoxid geläutert, und das ohne weitere Polierschritte direkt eine Oberflächenstruktur mit einer Rauheit bestimmt durch den Mittenrauhwert $R_a \leq 0.02\ \mu m$ und/oder dem quadratischen Mittenrauhwert $R_q \leq 0,01\ \mu m$ aufweist.

2. Glaskeramikkörperkörper nach Anspruch 1 mit einem gefloateten Aluminosilicatglas als Ausgangsglas.

3. Glaskeramikkörper nach Anspruch 2, **gekennzeichnet durch** eine Zusammensetzung des Ausgangsglases (in Gew.-% auf Oxidbasis) von:

| | |
|---|---|
| $Li_2O$ | 3,2-5,0 |
| $Na_2O$ | 0-1,5 |
| $K_2O$ | 0-1,5 |

(fortgesetzt)

| | |
|---|---|
| $\Sigma Na_2O+K_2O$ | 0,2-2,0 |
| MgO | 0,1-2,2 |
| CaO | 0-1,5 |
| SrO | 0-1,5 |
| BaO | 0-2,5 |
| ZnO | 0-<1,5 |
| $Al_2O_3$ | 19-25 |
| $SiO_2$ | 55-69 |
| $TiO_2$ | 1,0-5,0 |
| $ZrO_2$ | 1,0-2,5 |
| $SnO_2$ | 0-<1,0 |
| $\Sigma TiO_2+ZrO_2+SnO_2$ | 2,5-5,0 |
| $P_2O_5$ | 0-3,0 |

ggf. mit Zusatz färbender Kompomenten, wie V-, Cr-, Mn-, Fe-, Co-, Cu-, Ni-, Se-, Cl-Verbindungen.

4. Glaskeramikkörper nach Anspruch 3, **gekennzeichnet durch** eine Zusammensetzung des Ausgangsglases (in Gew.-% of Oxidbasis) von:

| | |
|---|---|
| $Li_2O$ | 3,5-4,5 |
| $Na_2O$ | 0,2-1,0 |
| $K_2O$ | 0-0,8 |
| $\Sigma Na_2O+K_2O$ | 0,4-1,5 |
| MgO | 0,3-2,0 |
| CaO | 0-1,0 |
| SrO | 0-1,0 |
| BaO | 0-2,5 |
| ZnO | 0-1,0 |
| $Al_2O_3$ | 19-24 |
| $SiO_2$ | 60-68 |
| $TiO_2$ | 1,0-2,0 |
| $ZrO_2$ | 1,2-2,2 |
| $SnO_2$ | 0-0,6 |
| $\Sigma TiO_2+ZrO_2+SnO_2$ | 3,0-4,5 |
| $P_2O_5$ | 0-2,0 |

ggf. mit Zusatz färbender Kompomenten, wie V-, Cr-, Mn-, Fe-, Co-, Cu-, Ni-, Se-, Cl-Verbindungen.

5. Glaskeramikkörper nach einem der Ansprüche 2 bis 4, **gekennzeichnet dadurch, daß** für das Ausgangsglas zur Vermeidung der Entstehung eines schädlichen oberflächennahen Kristallbandes beim Floaten die Beziehung (in Gew.-%) : 3,2 x ZnO + $TiO_2 \le 4,3$ gilt.

6. Glaskeramikkörper nach einem der Ansprüche 2 bis 5, **gekennzeichnet durch** Gehalte von weniger als 200 ppb $Fe_2O_3$ und weniger als 2,5 Gew.-% $TiO_2$ im Ausgangsglas, um einer störenden Einfärbung im glasigen Zustand entgegenzuwirken und um eine Lichttansmission bei 4 mm Dicke von > 89% bevorzugt, > 90% zu erreichen.

7. Glaskeramikkörper nach einem der Ansprüche 2 bis 6, **dadurch gekennzeichnet, daß** das Ausgangsglas technisch frei von BaO ist.

8. Glaskeramikkörper nach einem der Ansprüche 2 bis 7, **gekennzeichnet durch** einen Wärmeausdehnungskoeffizienten $\alpha_{20/300}$ zwischen 3,5 und 5,0 x $10^{-6}$/K, eine Transformationstempertur Tg zwischen 600 und 750° C und eine Verarbeitungstemperatur $V_A$ der Glaskeramik unter 1350° C.

**9.** Glaskeramikkörper nach einem der Ansprüche 2 bis 8, **gekennzeichnet durch** einen Wärmeausdehungskoeffizienten der Glaskeramik mit Keatit-Mischkristallen als vorherrschende Kristallphase von weniger als 1,5 x $10^{-6}$/K.

**10.** Glaskeramikkörper nach einem der Ansprüche 2 bis 8, **gekennzeichnet durch** einen Wärmeausdehungskoeffizienten der Glaskeramik mit Hochquarz-Mischkristallen als vorherrschende Kristallphase von $(O \pm 0,3)$ x $10^{-6}$/K, bevorzugt $(O \pm 0,15)$ x $10^{-6}$/K und eine Lichttransmission von > 80%.

**11.** Glaskeramikkörper nach einem der Ansprüche 2 bis 10, **gekennzeichnet dadurch, daß** zum Erreichen einer geringen Blasenzahl wenigstens ein alternatives chemisches Läutermittel, wie z.B. $SnO_2$, $CeO_2$, Sulfatverbindungen, Chloridverbindungen, bevorzugt 0,2-0,6 Gew.-% $SnO_2$ der Glasschmelze zugesetzt ist.

**12.** Glaskeramikkörper nach einem der Ansprüche 2 bis 10, **gekennzeichnet dadurch, daß** zum Erreichen einer geringen Blasenzahl die Glasschmelzephysikalisch, z.B. mittels Unterdruck oder mittels Hochtemperatur > 1750° C geläutert ist.

**Claims**

**1.** Easily cleanable glass-ceramic article, ceramicized from a starting float glass which contains less than 300 ppb Pt, less than 30 ppb Rh, less than 1.5% by weight ZnO and less than 1% by weight $SnO_2$, is refined in the melt without using the standard refining agents arsenic oxide and/or antimony oxide and which without further polishing steps immediately has a surface structure with a roughness determined by the roughness average $R_a \leq 0.02$ $\mu$m and/for the roughness average square $R_q \leq 0.01$ $\mu$m.

**2.** Glass-ceramic article according to Claim 1 with an aluminosilicate float glass as the starting glass.

**3.** Glass-ceramic article according to Claim 2, **characterized by** a starting glass composition (in % by weight, based on oxide) of:

| | |
|---|---|
| $Li_2O$ | 3.2-5.0 |
| $Na_2O$ | 0-1.5 |
| $K_2O$ | 0-1.5 |
| $\Sigma Na_2O+K_2O$ | 0.2-2.0 |
| MgO | 0.1-2.2 |
| CaO | 0-1.5 |
| SrO | 0-1.5 |
| BaO | 0-2.5 |
| ZnO | 0-<1.5 |
| $Al_2O_3$ | 19-25 |
| $SiO_2$ | 55-69 |
| $TiO_2$ | 1.0-5.0 |
| $ZrO_2$ | 1.0-2.5 |
| $SnO_2$ | 0-<1.0 |
| $\Sigma TiO_2+ZrO_2+SnO_2$ | 2.5-5.0 |
| $P_2O_5$ | 0-3.0 |

and if appropriate with the addition of colouring components, such as V, Cr, Mn, Fe, Co, Cu, Ni, Se, Cl compounds.

**4.** Glass-ceramic article according to Claim 3, **characterized by** a starting glass composition (in % by weight, based on oxide) of:

| | |
|---|---|
| $Li_2O$ | 3.5-4.5 |
| $Na_2O$ | 0.2-1.0 |
| $K_2O$ | 0-0.8 |
| $\Sigma Na_2O+K_2O$ | 0.4-1.5 |

(continued)

| | |
|---|---|
| MgO | 0.3-2.0 |
| CaO | 0-1.0 |
| SrO | 0-1.0 |
| BaO | 0-2.5 |
| ZnO | 0-1.0 |
| $Al_2O_3$ | 19-24 |
| $SiO_2$ | 60-68 |
| $TiO_2$ | 1.0-2.0 |
| $ZrO_2$ | 1.2-2.2 |
| $SnO_2$ | 0-0.6 |
| $\Sigma TiO_2 + ZrO_2 + SnO_2$ | 3.0-4.5 |
| $P_2O_5$ | 0-2.0 |

if appropriate with the addition of colouring components, such as V, Cr, Mn, Fe, Co, Cu, Ni, Se, Cl compounds.

5. Glass-ceramic article according to one of Claims 2 to 4, **characterized in that** during the float process the relationship (in % by weight): $3.2 \times ZnO + TiO_2 \leq 4.3$ applies to the starting glass, to avoid the formation of a harmful crystal band close to the surface.

6. Glass-ceramic article according to one of Claims 2 to 5, **characterized by** contents of less than 200 ppb $Fe_2O_3$ and less than 2.5% by weight $TiO_2$ in the starting glass, in order to counteract disruptive colouration in the vitreous state and to achieve a light transmission of > 89%, preferably > 90% at a thickness of 4 mm.

7. Glass-ceramic article according to one of Claims 2 to 6, **characterized in that** the starting glass is technically free of BaO.

8. Glass-ceramic article according to one of Claims 2 to 7, **characterized by** a coefficient of thermal expansion $\alpha_{20/300}$ of between 3.5 and 5.0 x $10^{-6}$/K, a transformation temperature Tg of between 600 and 750°C and a working point $V_A$ of the glass-ceramic of less than 1350°C.

9. Glass-ceramic article according to one of Claims 2 to 8, **characterized by** a coefficient of thermal expansion of the glass-ceramic with keatite solid solutions as the dominant crystal phase of less than 1.5 x $10^{-6}$/K.

10. Glass-ceramic article according to one of Claims 2 to 8, **characterized by** a coefficient of thermal expansion of the glass-ceramic with beta-quartz solid solutions as the dominant crystal phase of $(0 \pm 0.3)$ x $10^{-6}$/K, preferably $(0 \pm 0.15)$ x $10^{-6}$/K and a light transmission of > 80%.

11. Glass-ceramic article according to one of Claims 2 to 10, **characterized in that** to achieve a low number of bubbles at least one alternative chemical refining agent, such as for example $SnO_2$, $CeO_2$, sulphate compounds, chloride compounds, preferably 0.2-0.6% by weight of $SnO_2$, is added to the glass melt.

12. Glass-ceramic article according to one of Claims 2 to 10, **characterized in that** to achieve a low number of bubbles the glass melt is refined physically, for example by means of subatmospheric pressure or by means of a high temperature of > 1750°C.

**Revendications**

1. Corps en vitrocéramique facile à nettoyer, converti en céramique à partir d'un verre flotté de départ, qui présente une teneur de moins de 300 ppb de Pt, de moins de 30 ppb de Rh, de moins de 1,5% en poids de ZnO et de moins de 1% en poids de $SnO_2$, qui est affiné lors de la fusion sans utilisation des agents d'affinage habituels oxyde d'arsenic et/ou oxyde d'antimoine, et qui présente, sans étapes de polissage supplémentaires, directement une structure superficielle ayant une rugosité déterminée par la rugosité moyenne arithmétique $R_a \leq 0,02$ $\mu$m et/ou la rugosité moyenne quadratique $R_q \leq 0,01$ $\mu$m.

**2.** Corps en vitrocéramique selon la revendication 1, avec un verre flotté d'aluminosilicate en tant que verre de départ.

**3.** Corps en vitrocéramique selon la revendication 2, **caractérisé par** une composition du verre de départ (en % en poids sur la base des oxydes) de :

| | |
|---|---|
| $Li_2O$ | 3,2-5,0 |
| $Na_2O$ . | 0-1,5 |
| $K_2O$ | 0-1,5 |
| $\Sigma Na_2O+K_2O$ | 0,2-2,0 |
| MgO | 0,1-2,2 |
| CaO | 0-1,5 |
| SrO | 0-1,5 |
| BaO | 0-2,5 |
| ZnO | 0-<1,5 |
| $Al_2O_3$ | 19-25 |
| $SiO_2$ | 55-69 |
| $TiO_2$ | 1,0-5,0 |
| $ZrO_2$ | 1,0-2,5 |
| $SnO_2$ | 0-<1,0 |
| $\Sigma TiO_2+ZrO_2+SnO_2$ | 2,5-5,0 |
| $P_2O_5$ | 0-3,0 |

le cas échéant, avec l'addition de composants colorants comme des composés de V, Cr, Mn, Fe, Co, Cu, Ni, Se, Cl.

**4.** Corps en vitrocéramique selon la revendication 3, **caractérisé par** une composition du verre de départ (en % en poids sur la base des oxydes) de :

| | |
|---|---|
| $Li_2O$ | 3,5-4,5 |
| $Na_2O$ | 0,2-1,0 |
| $K_2O$ | 0-0,8 |
| $\Sigma Na_2O+K_2O$ | 0,4-1,5 |
| MgO | 0,3-2,0 |
| CaO | 0-1,0 |
| SrO | 0-1,0 |
| BaO | 0-2,5 |
| ZnO | 0-1,0 |
| $Al_2O_3$ | 19-24 |
| $SiO_2$ | 60-68 |
| $TiO_2$ | 1,0-2,0 |
| $ZrO_2$ | 1,2-2,2 |
| $SnO_2$ | 0-0,6 |
| $\Sigma TiO_2+ZrO_2+SnO_2$ | 3,0-4,5 |
| $P_2O_5$ | 0-2,0 |

le cas échéant, avec l'addition de composants colorants comme des composés de V, Cr, Mn, Fe, Co, Cu, Ni, Se, Cl.

**5.** Corps en vitrocéramique selon l'une quelconque des revendications 2 à 4, **caractérisé en ce que**, pour le verre de départ, en vue d'empêcher la formation d'une bande cristalline néfaste proche de la surface, est valable, lors du flottage, la relation (en % en poids): $3,2 \times ZnO + TiO_2 \leq 4,3$.

**6.** Corps en vitrocéramique selon l'une quelconque des revendications 2 à 5, **caractérisé par** des teneurs de moins de 200 ppb de $Fe_2O_3$ et de moins de 2,5% en poids de $TiO_2$ dans le verre de départ, pour contrer une coloration perturbatrice à l'état vitreux et pour parvenir à une transmission de lumière, pour une épaisseur de 4 mm, de > 89%, de préférence, > 90%.

**7.** Corps en vitrocéramique selon l'une quelconque des revendications 2 à 6, **caractérisé en ce que** le verre de départ est exempt, du point de vue technique, de BaO.

**8.** Corps en vitrocéramique selon l'une quelconque des revendications 2 à 7, **caractérisé par** un coefficient de dilatation thermique $\alpha_{20/300}$ compris entre 3,5 et 5,0 x $10^{-6}$/K, par une température de transformation Tg comprise entre 600 et 750°C et par une température de mise en oeuvre $V_A$ de la vitrocéramique inférieure à 1350°C.

**9.** Corps en vitrocéramique selon l'une quelconque des revendications 2 à 8, **caractérisé par** un coefficient de dilatation thermique de la vitrocéramique, ayant des cristaux mixtes de kéatite en tant que phase cristalline prédominante, de moins de 1,5 x $10^{-6}$/K.

**10.** Corps en vitrocéramique selon l'une quelconque des revendications 2 à 8, **caractérisé par** un coefficient de dilatation thermique de la vitrocéramique, ayant des cristaux mixtes de quartz affiné en tant que phase cristalline prédominante, de $(0 \pm 0,3)$ x $10^{-6}$/K, de préférence, de $(0 \pm 0,15)$ x $10^{-6}$/K et une transmission de lumière de > 80 %.

**11.** Corps en vitrocéramique selon l'une quelconque des revendications 2 à 10, **caractérisé en ce qu'**en vue de parvenir à un nombre de bulles faible, on ajoute à la masse de verre en fusion au moins un agent d'affinage chimique alternatif, comme, par exemple, le $SnO_2$, le $CeO_2$, des composés de sulfate, des composés de chlorure, de préférence, de 0,2-0,6 % en poids de $SnO_2$.

**12.** Corps en vitrocéramique selon l'une quelconque des revendications 2 à 10, **caractérisé en ce qu'**en vue de parvenir à un nombre de bulles faible, on procède à l'affinage de la masse de verre en fusion par voie physique, par exemple, à l'aide d'une sous - pression ou à l'aide d'une température élevée > 1750°C.